# EUROPÄISCHE PATENTSCHRIFT

(11) **EP 3 454 143 B1**
(45) Veröffentlichungstag und Bekanntmachung des Hinweises auf die Patenterteilung: **18.03.2020**
(21) Anmeldenummer: 17190411.3
(22) Anmeldetag: 11.09.2017
(51) Int. Cl.: H04L 29/08, H04W 12/00

(54) **SYSTEM FÜR DIE GEBÄUDEAUTOMATION UND EIN ENTSPRECHENDES VERFAHREN**
SYSTEM FOR BUILDING AUTOMATION AND CORRESPONDING METHOD
SYSTÈME D'AUTOMATISATION DE LA GESTION DES BÂTIMENTS ET PROCÉDÉ CORRESPONDANT

(43) Veröffentlichungstag der Anmeldung: 13.03.2019
(73) Patentinhaber: GIRA GIERSIEPEN GmbH & Co. KG, 42477 Radevormwald (DE)
(72) Erfinder: Kobold, Andreas, 50670 Köln (DE)
(74) Vertreter: Angerhausen, Christoph

(56) Entgegenhaltungen:
- EP-A1- 3 070 556
- EP-A1- 3 116 167
- US-A1- 2016 294 446

## Beschreibung

Die Erfindung geht aus von einem System für die Gebäudeautomation mit den Merkmalen des Oberbegriffs des Anspruchs 1. Ein derartiges System ist aus der US 2016/294446 A1 bekannt. Ein weiteres System ist aus der EP 2 561 413 B1 bekannt.

Bekannte Bussysteme arbeiten beispielsweise nach dem weit verbreiteten KNX-Standard für die Signalübertragung zwischen den Busteilnehmer. Derartige Bussysteme sind jedoch über die reine Signalübertragung hinaus nicht für die Übertragung größerer Datenmengen geeignet. Andererseits ist es jedoch beispielsweise zu Servicezwecken wünschenswert, einen bestimmten Busteilnehmer mit einem Softwareupdate von Zeit zu Zeit zu versorgen. Im Stand der Technik ist es üblich, dass entweder derartige Softwareupdates unterbleiben, oder in seltenen Fällen der betreffende Busteilnehmer aus dem Bussystem entfernt, mithin beispielsweise aus einer Unterputz-Montagedose ausgebaut, und dann an den Komponentenhersteller versandt wird, damit dieser das gewünschte Softwareupdate vornimmt oder das Update über die Buskommunikation durch den Anwender selbst.

Es ist daher die Aufgabe der Erfindung, ein System für die Gebäudeautomation der eingangs beschriebenen Art derart weiterzuentwickeln, dass es auf komfortable Weise Softwareupdates für die Busteilnehmer des Systems erlaubt, vorzugsweise ohne dass dafür eine Demontage des betreffenden Busteilnehmers aus dem Bussystem erforderlich ist und die Buskommunikation während des Updates vollständig erhalten bleibt.

Diese Aufgabe wird durch ein System für die Gebäudeautomation mit den Merkmalen des Anspruchs 1 gelöst. Der nebengeordnete Anspruch 14 beschreibt ein entsprechendes Verfahren. Vorteilhafte Ausführungsformen der Erfindung sind Gegenstand der abhängigen Ansprüche.

Demgemäß sind mehrere der Busteilnehmer mit dem Endgerätjeweils über eine Datenverbindung verbunden, die zwischen der Datenschnittstelle des jeweiligen Busteilnehmers und der zu dieser korrespondierenden weiteren Datenschnittstelle des Endgeräts hergestellt ist. Der Datensatz kann beispielsweise eine Firmware für den Busteilnehmer sein. Der Datensatz ist jedoch auf keine bestimmten Datensätze beschränkt.

Die Datenschnittstelle kann eine bidirektionale Funkschnittstelle, insbesondere eine Bluetooth-Schnittstelle, eine BLE-Schnittstelle, eine NFC-Schnittstelle, oder eine WLAN-Schnittelle sein.

Das Merkmal kann beispielsweise ein QR-Code oder eine ID-Nummer sein. Der QR-Code kann beispielsweise auf einem Display des Busteilnehmers angezeigt sein, mit welchem das Endgerät die Datenverbindung, etwa für ein Firmware-Update, herstellen soll.

Wenn das Merkmal auf einem Display des Busteilnehmers angezeigt ist, kann beispielsweise vorgesehen sein, dass der Busteilnehmer ein Gerät für die Unterputzmontage ist, beispielsweise ein Lichtschalter, wobei das Display ein auf Putz angeordnetes Display des Busteilnehmers ist, etwa auf einem Taster der Schalteres oder einem Außenrahmen eines Dekorrahmens des Lichtschalters.

Der Datensatz kann eine Zustandsinformation des Busteilnehmers, ein Steuersignal zur Ansteuerung des Busteilnehmers, oder ein Freischaltsignal zum Freischalten mindestens einer Zustandsinformation auf dem Busteilnehmer aufweisen. Das Endgerät kann dazu eingerichtet sein, einen Datensatz mit Zustandsinformationen des Busteilnehmers zu empfangen und/oder weiterzuverarbeiten.

Das Endgerät kann beispielsweise ein Smartphone, ein Tablet, ein Personal Computer, oder ein Notebook sein.

Auf dem Endgerät kann ein Gerätezustand von einem oder von mehreren der mit dem Endgerät verbundenen Busteilnehmer angezeigt sein, wobei das Endgerät eine Eingabe aufweist, über die der Gerätezustand oder die Gerätezustände selektiv oder gruppiert manipulierbar sind.

Das Bussystem kann insbesondere ein KNX-System und der Datensatz eine KNX-Projektdatei sein, wobei das Endgerät dazu eingerichtet ist, eine über die Datenverbindung von dem identifizierten Busteilnehmer an das Endgerät übertragende KNX-Projektdatei zu manipulieren und als manipulierte KNX-Projektdabei an den identifizierten Busteilnehmer zurück zu übertragen.

Der Datensatz kann mindestens ein Steuersignal zum Ansteuern eines Busteilnehmers des Bussystems aufweisen.

Mehrere der Busteilnehmer weisen eine Datenschnittstelle auf und sind jeweils über eine Datenverbindung zu der weiteren Datenschnittstelle mit dem Endgerät verbunden, wobei das Endgerät eine Ortsinformation sämtlicher der über eine Datenverbindung mit ihm verbundenen Busteilnehmer aufweisen kann. Das Endgerät kann dazu eingerichtet sein, aus der Ortsinformation der Busteilnehmer auf seine aktuelle Position zu schließen. Dies kann beispielsweise mit Hilfe von Laufzeitmessung oder Triangulation erfolgen.

Gemäß einem anderen Aspekt wird ein Verfahren für die Datenübertragung zwischen einem Bussystem und einem Endgerät beschrieben, dass die Schritte aufweist:
- Bereitstellen eines Bussystems mit einer Mehrzahl eine Datenschnittstelle aufweisender Busteilnehmer, insbesondere Aktoren, Sensoren und/oder Bedienelemente, die für die Signalübertragung miteinander verbunden sind,
- Identifizieren eines der Busteilnehmer mit einem eine weitere Datenschnittstelle aufweisendes Endgerät, insbesondere einem Smartphone, einem Tablet, einem Personal Computer, oder einem Notebook,
- Herstellen einer Datenverbindung zwischen der weiteren Datenschnittstelle des Endgeräts und dem identifizierten Busteilnehmer, insbesondere über eine Bluetooth-Schnittstelle, eine BLE-Schnittstelle, eine NFC-Schnittstelle, oder eine WLAN-Schnittstelle, und
- Austauschen eines Datensatzes zwischen der weiteren Datenschnittstelle des Endgeräts und der Datenschnittstelle des identifizierten Busteilnehmers,
   wobei bei dem Herstellen einer Datenverbindung mehrere der Busteilnehmer jeweils über eine Datenverbindung mit dem Endgerät verbunden sind, die zwischen der Datenschnittstelle und der mit der Datenschnittstelle korrespondierenden weiteren Datenschnittstelle des Endgeräts hergestellt ist.

Das Austauschen des Datensatzes kann das Übertragen einer Firmware von dem Endgerät an den identifizierten Busteilnehmer aufweisen.

Das Austauschen des Datensatzes kann weiterhin das Übertragen einer KNX-Projektdatei des Bussystems von dem identifizierten Busteilnehmer an das Endgerät aufweisen.

Das Austauschen des Datensatzes kann weiterhin das Manipulieren einer KNX-Projektdatei mit dem Endgerät und das Zurückübertragen der manipulierten KNX-Projektdatei an den identifizierten Busteilnehmer aufweisen. Die KNX-Projektdatei kann gegebenenfalls vor dem Manipulieren durch das Endgerät von dem identifizierten Busteilnehmer empfangen worden sein.

Weitere Einzelheiten der Erfindung werden anhand der nachstehenden Figuren erläutert. Dabei zeigt:
- Figur 1: ein System für die Gebäudeautomation gemäß einer Ausführungsform der Erfindung; und
- Figur 2: ein Verfahren für die Datenübertragung zwischen einem Bussystem und einem Endgerät gemäß einer Ausführungsform der Erfindung.

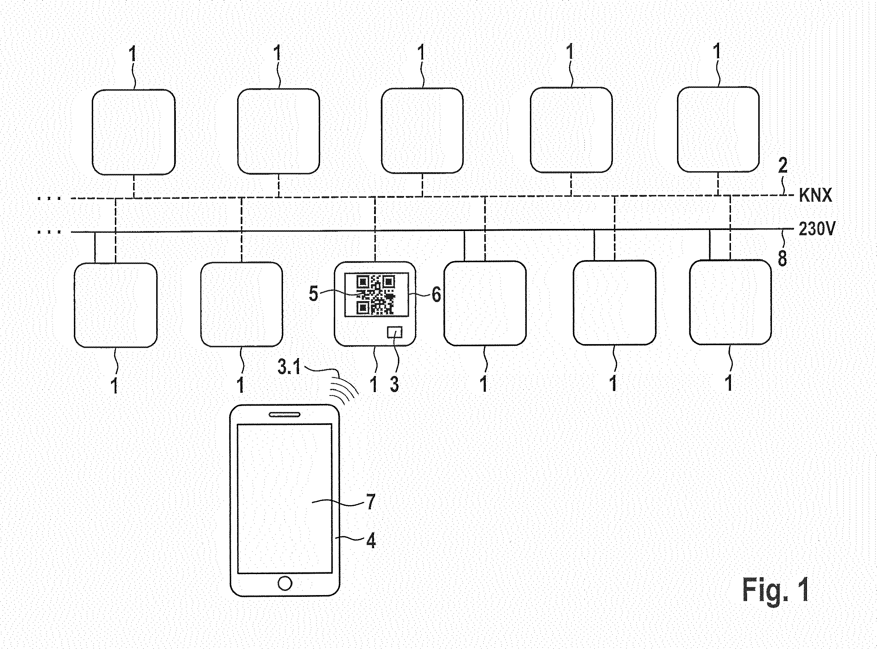

Das in Figur 1 gezeigte System für die Gebäudeautomation weist eine Mehrzahl Busteilnehmer 1 auf, die über ein Bussystem 2 für die Signalübertragung miteinander verbunden sind. Die untere Zeile der Busteilnehmer 1 ist weiterhin an eine Stromnetzleitung 8 angeschlossen. Während somit die obere Zeile der Busteilnehmer 1 beispielsweise Sensoren sein können, beispielsweise ein Lichtsensor, ein Temperatursensor, oder ein Windsensor, können die in der unteren Zeile angeordneten Busteilnehmer 1 Aktoren sein, beispielsweise ein Energielastschalter (Lichtschalter) oder ein elektromotorisch angesteuertes Heizkörperventil.

Mehrere der Busteilnehmer 1 weisen neben ihrer jeweiligen Schnittstelle zu dem Bussystem 2 eine Datenschnittstelle 3 auf, die insbesondere als bidirektionale Funkschnittsteller, beispielsweise als eine Bluetooth-Schnittstelle, eine BLE-Schnittstelle, eine NFC-Schnittstelle oder eine WLAN-Schnittstelle ausgebildet sein kann. Eine korrespondierende weitere Datenschnittstelle 3.1 weist ein Endgerät 4 auf, welches beispielsweise ein mobiles Endgerät, wie ein Mobiltelefon, ein Tablet oder dergleichen sein kann. Das Endgerät 4 ist nicht Bestandteil des Bussystems 2, so dass mit Hilfe der Datenschnittstellen 3, 3.1 eine Anbindung des Bussystems an dem Bussystem fremde Teilnehmer möglich ist, insbesondere für den Austausch großer Datenmengen, wie es für ein Firmware-Update des Busteilnehmers 1 erforderlich sein kann. Diese Datenschnittstelle 3, 3.1 kann beispielsweise dazu verwendet werden, um einen Datensatz zwischen dem Endgerät 4 und dem die Datenschnittstelle 3 aufweisenden Busteilnehmer 1 auszutauschen. Der Datensatz kann beispielsweise eine Firmware für den Busteilnehmer 1 sein.

Der Busteilnehmer 1 kann ein Display 6 aufweisen, auf dem ein Identifizierungsmerkmal, hier ein QR-Code, angezeigt wird, mit Hilfe welches der betreffende Busteilnehmer 1 eindeutig identifizierbar ist. Für den Identifizierungsprozess kann beispielsweise mit einem Kameramodul des Endgeräts 4 der QR-Code optisch eingelesen und beispielsweise eine in dem QR-Code hinterlegte ID-Nummer identifiziert werden. Unter Rückgriff auf eine Datenbank kann das Endgerät 4 anhand der eindeutigen Identifikation des Busteilnehmers 1 eine für den Busteilnehmer 1 spezifische Firmware bereitstellen und über die Datenschnittstelle 3, 3.1 an den Busteilnehmer 1 übertragen.

Grundsätzlich kann die Datenschnittstelle 3, 3.1 jedoch nicht nur für die Übertragung einer Firmware an den Busteilnehmer 1 verwendet werden. Gemäß einer Ausführungsform kann über die Datenschnittstelle 3, 3.1 beispielsweise auch eine KNX-Projektdatei übertragen werden. So ist es beispielsweise denkbar, dass mit Hilfe des Geräts 4 eine KNX-Projektdatei des Bussystems 2 abgerufen, auf dem Endgerät 4 manipuliert und als manipulierte KNX-Projektdatei an das Bussystem zurück übermittelt wird.

Mehrere der Busteilnehmer weisen eine Datenschnittstelle 3 auf und sind jeweils über eine Datenverbindung zu der weiteren Datenschnittstelle 3.1 des Endgeräts 4 mit dem Endgerät 4 verbunden . Das Endgerät 4 kann dabei einen Gerätezustand von einem oder von mehreren der mit dem Endgerät 4 verbundenen Busteilnehmer 1 anzeigen. Weiterhin kann das Endgerät 4 eine Eingabe aufweisen, über die die erfassten Gerätezustände selektiv oder gruppiert manipuliert werden können, etwa für eine Szenensteuerung.

Das Endgerät 4 kann weiterhin dazu eingerichtet sein, aktuelle Gerätezustände der Busteilnehmer 1, beispielsweise Schaltstellungen von Relais oder elektronischen Ausgängen anzuzeigen, was im Stand der Technik allenfalls über LEDs am Busteilnehmer 1 selbst angezeigt wurde.

Ebenfalls kann das Endgerät 4 dazu eingerichtet sein, aktuelle Gerätezustände der Busteilnehmer 1 zu verändern, wobei dies bisher leidglich über entsprechende Schaltelemente und dergleichen am Busteilnehmer 1 selbst erreicht werden konnte.

Es ist weiterhin möglich, dass das Endgerät 4 dazu eingerichtet ist, aktuelle Gerätezustände von Busteilnehmern 1, welche sich im Umfeld des Endgeräts 4 befinden, anzuzeigen und zu verändern.

Das Endgerät 4 kann dazu eingerichtet sein, KNX-Projektdateien einzulesen, so dass zusätzliche Projektinformationen verfügbar gemacht werden, welche mit aktuellen Gerätezuständen der Busteilnehmer 1 (zum Beispiel Schaltstellungen von Relais oder elektronischen Ausgängen) eines oder mehrerer sich im Umfeld des Endgeräts 4 befindlicher Busteilnehmer 1 angezeigt und verändert werden können Einem Bediener wird somit die Möglichkeit gegeben, ohne Kenntnis des Aufbaus des Bussystems gezielte Vor-Ort-Bedienungen vorzunehmen. Mit dem Endgerät 4 können somit aktuelle Betriebszustände der Busteilnehmer 1 ausgelesen werden, beispielsweise "Gerät gesperrt" oder "Fehler", welche bisher nicht über den Busteilnehmer 1 angezeigt werden konnten.

Mit Hilfe des Endgeräts 4 können zusätzliche Funktionen auf den Busteilnehmer 1 übertragen werden, beispielsweise eine "Szenensteuerung", oder der Busteilnehmer 1 kann freigeschaltet werden.

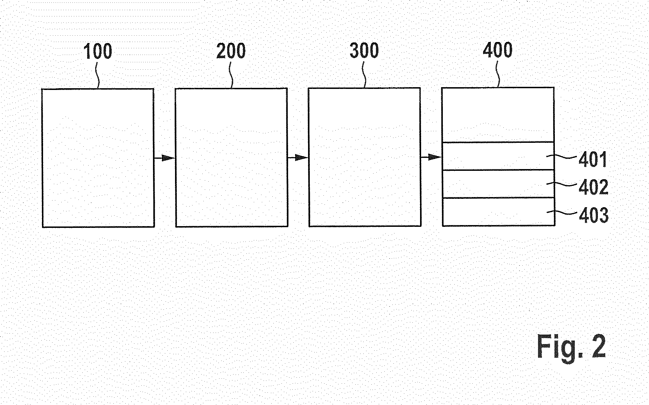

Die Figur 2 zeigt ein schematisches Blockdiagramm eines Verfahrens für die Datenübertragung zwischen einem Bussystem und einem Endgerät. Das Verfahren weist das Bereitstellen 100 eines Bussystems auf, wobei das Bussystem eine Mehrzahl Busteilnehmer aufweisen kann, insbesondere Aktoren, Sensoren und/oder Bedienelemente, die für die Signalübertragung miteinander verbunden sind.

In einem Schritt 200 wird einer der Busteilnehmer mit einem Endgerät, insbesondere mit einem Smartphone, einem Tablet, einem Personal Computer, oder mit einem Notebook identifiziert. Das Identifizieren 200 kann das Abrufen eines Datensatzes bzw. einer Datei aus einer Datenbank umfassen, wobei der Datensatz bzw. die Datei eine mit dem eindeutig identifizierten Bedienelement verknüpfte Datei/Datensatz ist, beispielsweise eine Firmware. Die Datei kann jedoch auch eine das gesamte Bussystem betreffende Datei sein, beispielsweise eine KNX-Projektdatei.

In einem Schritt 300 wird eine Datenverbindung zwischen dem Endgerät und dem identifizierten Busteilnehmer über eine Datenschnittstelle hergestellt, beispielsweise eine Bluetooth-Schnittstelle, eine BLE-Schnittstelle, eine NFC-Schnittstelle, oder eine WLAN-Schnittstelle.

Nach dem Aufbau der Datenverbindung zwischen dem Endgerät und dem identifizierten Busteilnehmer wird ein Datensatz bzw. eine Datei zwischen dem Endgerät und dem Busteilnehmer über die Datenschnittstelle ausgetauscht.

Das Austauschen 400 des Datensatzes bzw. der Datei kann das Übertragen 401 einer Firmware von dem Endgerät an den identifizierten Busteilnehmer aufweisen.

Alternativ oder zusätzlich kann das Austauschen des Datensatzes auch das Übertragen einer KNX-Projektdatei des Bussystems von dem identifizierten Busteilnehmer an das Endgerät aufweisen.

Das Austauschen des Datensatzes kann weiterhin das Manipulieren der KNX-Projektdatei mit dem Endgerät und das Zurückübertragen der manipulierten KNX-Projektdatei an den identifizierten Busteilnehmer aufweisen.

### Bezugszeichenliste:

- 1: Busteilnehmer
- 2: Bussystem
- 3: Datenschnittstelle
- 3.1: weitere Datenschnittstelle
- 4: Endgerät
- 5: Merkmal
- 6: Display
- 7: Eingabe
- 8: Netzanschluss
- 100: Bereitstellen
- 200: Identifizieren
- 300: Herstellen
- 400: Austauschen
- 401: Übertragen einer Firmware
- 401: Übertragen einer KNX-Projektdabei
- 403: Manipulieren

## Patentansprüche

1. System für die Gebäudeautomation, mit einer Mehrzahl Busteilnehmem (1), insbesondere Aktoren, Sensoren und/oder Bedienelementen, die über ein Bussystem (2) für die Signalübertragung untereinander miteinander verbunden sind, wobei die Busteilnehmer (1) eine Datenschnittstelle (3) aufweisen und ein eine weitere Datenschnittstelle (3.1) aufweisendes Endgerät (4) außerhalb des Bussystems (2) eine Identifizierungseinrichtung aufweist, die dazu eingerichtet ist, mindestens einen der Busteilnehmer (1) anhand eines eindeutigen Merkmals (5) zu identifizieren, wobei das Endgerät (4) und die Busteilnehmer (1) dazu eingerichtet sind, nach erfolgter Identifizierung einen Datensatz zwischen der Datenschnittstelle (3) des mindestens einen Busteilnehmers (1) und der weiteren Datenschnittstelle (3.1) des Endgeräts (4) auszutauschen, **dadurch gekennzeichnet, dass** mehrere der Busteilnehmer (1) mit dem Endgerät (4) jeweils über eine Datenverbindung verbunden sind, die zwischen der Datenschnittstelle (3) des jeweiligen Busteilnehmers (1) und der zu dieser korrespondierenden weiteren Datenschnittstelle (3.1) des Endgeräts (3.1) hergestellt ist.

2. System nach Anspruch 1, bei dem der Datensatz eine Firmware für den Busteilnehmer (1) ist.

3. System nach Anspruch 1 oder 2, bei dem die Datenschnittstelle (3) eine birektionale Funkschnittstelle, insbesondere eine Bluetooth-Schnittstelle, eine BLE-Schnittstelle, eine NFC-Schnittstelle, oder eine WLAN-Schnittstelle ist.

4. System nach einem der vorangegangenen Ansprüche, bei dem das Merkmal (5) einen QR-Code oder eine ID-Nummer ist.

5. System nach einem der vorangegangenen Ansprüche, bei dem das Merkmal (5) auf einem Display (6) des Busteilnehmers (1) angezeigt ist.

6. System nach Anspruch 5, bei dem der Busteilnehmer (1) ein Gerät für die Unterputzmontage ist, wobei das Display (6) ein auf Putz angeordnetes Display (6) des Busteilnehmers (1) ist.

7. System nach einem der vorangegangenen Ansprüche, bei dem der Datensatz eine Zustandsinformation des Busteilnehmers (1), ein Steuersignal zur Ansteuerung des Busteilnehmers (1), oder ein Freischaltsignal zum Freischalten mindestens einer Zusatzfunktion auf dem Busteilnehmer (1) aufweist.

8. System nach einem der vorangegangenen Ansprüche, bei dem das Endgerät (4) dazu eingerichtet ist, einen Datensatz mit Zustandsinformationen des Busteilnehmers (1) zu empfangen und weiter zu verarbeiten.

9. System nach einem der vorangegangenen Ansprüche, bei dem das Endgerät (4) ein Smartphone, ein Tablet, ein Personal Computer, oder ein Notebook ist.

10. System nach einem der vorangegangenen Ansprüche, bei dem auf dem Endgerät (4) ein Gerätezustand von einem oder mehreren der mit dem Endgerät (4) verbundenen Busteilnehmer (1) angezeigt ist, wobei das Endgerät (4) eine Eingabe (7) aufweist, über die Gerätezustände selektiv oder gruppiert manipulierbar sind.

11. System nach einem der vorangegangenen Ansprüche, bei dem das Bussystem (2) ein KNX-System und der Datensatz eine KNX-Projektdatei ist, wobei das Endgerät (4) dazu eingerichtet ist, eine über die Datenverbindung von dem identifizierten Busteilnehmer (1) an das Endgerät (4) übertragene KNX-Projektdatei zu manipulieren und als manipulierte KNX-Projektdatei an den identifizierten Busteilnehmer (1) zurück zu übertragen.

12. System nach einem der vorangegangenen Ansprüche, bei dem der Datensatz mindestens ein Steuersignal zum Ansteuern eines Busteilnehmers (1) des Bussystems (2) aufweist.

13. System nach einem der vorangegangenen Ansprüche, bei dem das Endgerät (4) eine Ortsinformation sämtlicher der über eine Datenverbindung mit ihm verbundenen Busteilnehmer (1) aufweist, wobei das Endgerät (4) dazu eingerichtet ist, aus der Ortsinformation der Busteilnehmer (1) auf seine aktuelle Position zu schließen.

14. Verfahren für die Datenübertragung zwischen einem Bussystem (2) und einem Endgerät (4), das die Schritte aufweist:
- Bereitstellen (100) eines Bussystems (2) mit einer Mehrzahl eine Datenschnittstelle (3) aufweisender Busteilnehmer (1), insbesondere Aktoren, Sensoren und/oder Bedienelemente, die für die Signalübertragung miteinander verbunden sind,
- Identifizieren (200) eines der Busteilnehmer (1) mit einem eine weitere Datenschnittstelle (3.1) aufweisenden Endgerät (4), insbesondere einem Smartphone, einem Tablet, einem Personal Computer, oder einem Notebook,
- Herstellen (300) einer Datenverbindung zwischen der weiteren Datenschnittstelle (3.1) des Endgeräts (4) und der Datenschnittstelle (3) des identifizierten Busteilnehmers (1), insbesondere über eine Bluetooth-Schnittstelle, eine BLE-Schnittstelle, eine NFC-Schnittstelle, oder eine WLAN-Schnittstelle, und
- Austauschen (400) eines Datensatzes zwischen der weiteren Datenschnittstelle (3,1) des Endgeräts (4) und der Datenschnittstelle (3) des identifizierten Busteilnehmers (1),
**dadurch gekennzeichnet, dass** bei dem Herstellen (300) einer Datenverbindung mehrere der Busteilnehmer (1) jeweils über eine Datenverbindung mit dem Endgerät (4) verbunden werden, die zwischen der Datenschnittstelle (3) und der mit der Datenschnittstelle (3) korrespondierenden weiteren Datenschnittstelle (3.1) des Endgeräts (4) hergestellt ist.

15. Verfahren nach Anspruch 14, bei dem das Austauschen (400) des Datensatzes das Übertragen (401) einer Firmware von dem Endgerät (4) an den identifizierten Busteilnehmer (1) aufweist.

16. Verfahren nach Anspruch 14, bei dem das Austauschen (400) des Datensatzes das Übertragen (402) einer KNX-Projektdatei des Bussystems (2) von dem identifizierten Busteilnehmer (1) an das Endgerät (4) aufweist.

17. Verfahren nach Anspruch 16, bei dem das Austauschen (400) des Datensatzes weiterhin das Manipulieren (403) der KNX-Projektdatei mit dem Endgerät (4) und das Zurückübertragen der manipulierten KNX-Projektdatei an den identifizierten Busteilnehmer (1) aufweist.

## Claims

1. A system for building automation, having a plurality of bus users (1), particularly actuators, sensors, and/or control elements, which are connected to each other via a bus system (2) for signal transmission, wherein the bus users (1) have a data interface (3) and a terminal (4) having a further data interface (3.1) comprises an identification device, which terminal (4) is outside the bus system (2), which identification device is configured to identify at least one of the bus users (1) based on a unique feature (5), wherein the terminal (4) and the bus user (1) are configured to exchange a data set between the data interfaces (3) of the at least one bus user (1) and the further data interface (3.1) of the terminal (4) after identification, **characterized in that** multiple of the bus users (1) are each connected to the terminal (4) via a data connection, which is established between the data interface (3) of the respective bus user (1) and the corresponding further data interface (3.1) of the terminal device (4) thereto.

2. The system according to claim 1, wherein the data set is a firmware for the bus user (1).

3. The system according to claim 1 or 2, wherein the data interface (3) is a bidirectional radio interface, particularly a Bluetooth interface, a BLE interface, an NFC interface, or a WLAN interface.

4. The system according to any one of the preceding claims, wherein the feature (5) is a QR code or an ID number.

5. The system according to any one of the preceding claims, wherein the feature (5) is displayed on a display (6) of the bus user (1).

6. The system according to claim 5, wherein the bus user (1) is a device for flush mounting, wherein the display (6) is a surface-mounted display (6) of the bus user (1).

7. The system according to any one of the preceding claims, wherein the data set comprises a status information of the bus user (1), a control signal for actuating the bus user (1), or an enable signal to activate at least one additional function on the bus user (1).

8. The system according to any one of the preceding claims, wherein the terminal (4) is configured to receive and further process a data set with status information of the bus user (1).

9. The system according to any one of the preceding claims, wherein the terminal (4) is a smartphone, a tablet, a personal computer, or a laptop.

10. The system according to any one of the preceding claims, wherein a device status of one or multiple of the bus users (1) connected to the terminal (4) is displayed on the terminal (4), wherein the terminal (4) comprises an input (7) via which the device states can be manipulated selectively or in groups.

11. The system according to any one of the preceding claims, wherein the bus system (2) is a KNX system and the data set is a KNX project file, wherein the terminal (4) is configured to manipulate a KNX project file transmitted from the identified bus user (1) to the terminal (4) via a data connection and to transmit the manipulated KNX project file back to the identified bus user (1).

12. The system according to any one of the preceding claims, wherein the data set comprises at least one control signal for actuating a bus user (1) of the bus system (2).

13. The system according to any one of the preceding claims, wherein multiple of the bus users (1) comprise a data interface (3) and are each connected to the terminal (4) via a data connection to the further data interface (3.1), wherein the terminal (4) comprises a location information of all the bus users (1) connected to the terminal (4) via a data connection, wherein the terminal (4) is configured to infer its current position from the location information of the bus users (1).

14. A method for data transmission between a bus system (2) and a terminal (4), comprising the following steps:
- providing (100) a bus system (2) having a plurality of bus users (1), particularly actuators, sensors, and/or control elements, which are connected to each other for signal transmission,
- identifying (200) one of the bus users (1) by means of a terminal (4) having a further data interface (3.1), particularly a smartphone, a tablet, a personal computer, or a laptop,
- establishing (300) a data connection between the further data interface (3.1) of the terminal (4) and the data interface (3) of the identified bus user (1), particularly via a Bluetooth interface, a BLE interface, an NFC interface, or a WLAN interface, and
- exchanging (400) a data set between the further data interface (3.1) of the terminal (4) and the data interface (3) of the bus user (1),
**characterized in that**, when establishing (300) a data connection, multiple of the bus users (1) are each connected to the terminal (4) via a data connection, which is established between the data interface (3) and the further data interface (3.1) of the terminal (4) corresponding to the data interface (3).

15. The method according to claim 14, wherein exchanging (400) the data set comprises transmitting (401) a firmware from the terminal (4) to the identified bus user (1).

16. The method according to claim 14, wherein exchanging (400) the data set comprises transmitting (402) a KNX project file of the bus system (2) from the identified bus user (1) to the terminal (4).

17. The method according to claim 16, wherein exchanging (400) the data further comprises manipulating (403) the KNX project file by means of the terminal (4) and transmitting the manipulated KNX project file back to the identified bus user (1).

## Revendications

1. Système de domotique, avec une pluralité de participants de bus (1), plus particulièrement des actionneurs, des capteurs et/ou des éléments de commande qui sont reliés entre eux par l'intermédiaire d'un système de bus (2) pour la transmission des signaux, les participants au bus (1) comprenant une interface de données (3) et un terminal (4), comprenant une autre interface de données (3.1), à l'extérieur du système de bus (2), comprenant un dispositif d'identification qui est conçu pour identifier au moins un des participants du bus (1) à l'aide d'une caractéristique unique (5), le terminal (4) et les participants du bus (1) étant conçus pour échanger, après l'identification, un ensemble de données entre l'interface de données (3) de l'au moins participant au bus (1) et l'autre interface de données (3,1) du terminal (4), **caractérisé en ce que** plusieurs des participants au bus (1) sont reliés au terminal (4) chacun par l'intermédiaire d'une liaison de données, qui est établie entre l'interface de données (3) du participant au bus (1) respectif et l'autre interface de données (3.1) correspondante du terminal (3.1).

2. Système selon la revendication 1, dans lequel l'ensemble de données est un firmware pour le participant au bus (1).

3. Système selon la revendication 1 ou 2, dans lequel l'interface de données (3) est une interface radio bidirectionnelle, plus particulièrement une interface Bluetooth, une interface BLE, une interface NFC ou une interface WLAN.

4. Système selon l'une des revendications précédentes, dans lequel la caractéristique (5) est un code QR ou un numéro d'identification.

5. Système selon l'une des revendications précédentes, dans lequel la caractéristique (5) est affichée sur un écran (6) du participant au bus (1).

6. Système selon la revendication 5, dans lequel le participant au bus (1) est un appareil pour montage encastré, l'écran (6) étant un écran (6) disposé en applique du participant au bus (1).

7. Système selon l'une des revendications précédentes, dans lequel l'ensemble de données comprend une information d'état du participant au bus (1), un signal de commande pour le contrôle du participant au bus (1) ou un signal de déverrouillage pour le déverrouillage d'au moins une fonction supplémentaire sur le participant au bus (1).

8. Système selon l'une des revendications précédentes, dans lequel le terminal (4) est conçu pour recevoir et traiter un ensemble de données avec des informations d'état du participant au bus (1).

9. Système selon l'une des revendications précédentes, dans lequel le terminal (4) est un smartphone, une tablette, un ordinateur personnel ou un ordinateur portable.

10. Système selon l'une des revendications précédentes, dans lequel, sur le terminal (4), est affiché un état d'appareil d'un ou plusieurs participants au bus (1) reliés avec le terminal (4), le terminal (4) comprenant une entrée (7) par l'intermédiaire de laquelle les états d'appareils peuvent être manipulés de manière sélective ou groupée.

11. Système selon l'une des revendications précédentes, dans lequel le système de bus (2) est un système KNX et l'ensemble de données est un fichier de projet KNX, le terminal (4) étant conçu pour manipuler un fichier de projet KNX transmis, par l'intermédiaire de la liaison de données, du participant au bus (1) identifié au terminal (4) et pour le retransmettre, en tant que fichier de projet KNX manipulé, au participant au bus (1) identifié.

12. Système selon l'une des revendications précédentes, dans lequel l'ensemble de données comprend au moins un signal de commande pour le contrôle d'un participant au bus (1) du système de bus (2).

13. Système selon l'une des revendications précédentes, dans lequel, sur le terminal (4) comprend une information de localisation de l'ensemble des participants au bus (1) relié avec lui par l'intermédiaire d'une liaison de données, le terminal (4) étant conçu pour déduire sa position actuelle de l'information de localisation des participants au bus (1).

14. Procédé pour la transmission de données entre un système de bus (2) et un terminal (4), qui comprend les étapes suivantes :
- mise à disposition (100) d'un système de bus (2) avec une pluralité de participants à un bus (1) comprenant une interface de données (3), plus particulièrement des actionneurs, des capteurs et/ou des éléments de commande, qui sont reliés entre eux pour la transmission de signaux,
- identification (200) d'un des participants au bus (1) avec un terminal (4) comprenant une autre interface de données (3.1), plus particulièrement un smartphone, une tablette, un ordinateur personnel ou un ordinateur portable,
- établissement (300) d'une liaison de données entre l'autre interface de données (3.1) du terminal (4) et l'interface de données (3) du participant au bus (1) identifié, plus particulièrement par l'intermédiaire d'une interface Bluetooth, d'une interface BLE, d'une interface NFC ou d'une interface WLAN et
- échange (400) d'un ensemble de données entre l'autre interface de données (3.1) du terminal (4) et l'interface de données (3) du participant au bus (1) identifié, **caractérisé en ce que**
lors de l'établissement (300) d'une liaison de données, plusieurs des participants au bus (1) sont reliés chacun avec le terminal (4) par l'intermédiaire d'une liaison de données qui est établie entre l'interface de données (3) et l'autre interface de données (3.1) du terminal (4), correspondant à l'interface de données (3).

15. Procédé selon la revendication 14, dans lequel l'échange (400) de l'ensemble de données comprend la transmission (401) d'un firmware du terminal (4) au participant au bus (1) identifié.

16. Procédé selon la revendication 14, dans lequel l'échange (400) de l'ensemble de données comprend la transmission (402) d'un fichier de projet KNX du système de bus (2) du participant au bus (1) au terminal (4).

17. Procédé selon la revendication 16, dans lequel l'échange (400) de l'ensemble de données comprend en outre la manipulation (403) du fichier de projet KNX avec le terminal (4) et la retransmission du fichier de projet KNX manipulé au participant au bus (1) identifié.
